# EUROPÄISCHE PATENTANMELDUNG

(11) **EP 4 356 703 A1**
(43) Veröffentlichungstag der Anmeldung: **24.04.2024**
(21) Anmeldenummer: 23186348.1
(22) Anmeldetag: 19.07.2023
(51) Int. Cl.: A01B 15/04, A01B 35/26

(54) **HACKSCHAR**

(30) Priorität: 18.10.2022 AT 508042022
(71) Anmelder: BOEHLERIT GmbH & Co.KG., 8605 Kapfenberg (AT)
(72) Erfinder: BÄRNTHALER, Walter, 8641 St. Marein im Mürztal (AT); BURBÖCK, Hannes, 8652 Kindberg/Aumühl (AT)
(74) Vertreter: Wirnsberger & Lerchbaum Patentanwälte OG

(57) **Zusammenfassung**

Die Erfindung betrifft eine Schar, insbesondere Hackschar (1), zum Eingriff in Erdreich, aufweisend einen Träger (2), welcher in Arbeitsrichtung schneidaktive äußere Eingriffsbereiche (3) aufweist, wobei der Träger (2) in den äußeren Eingriffsbereichen (3) zumindest bereichsweise nach unten abgekantet ist und in dem abgekanteten Eingriffsbereich mit zumindest einem Schneidelement (5) aus einem härteren Material als der Träger (2) bestückt ist. Zur Erreichung einer möglichst langen Standzeit ist erfindungsgemäß vorgesehen, dass der Träger (2) im abgekanteten Eingriffsbereich an einer Unterseite (6) mit einer Verstärkung (7) ausgebildet ist.

## Beschreibung

Die Erfindung betrifft eine Schar, insbesondere Hackschar, zum Eingriff in Erdreich, aufweisend einen Träger, welcher in Arbeitsrichtung schneidaktive äußere Eingriffsbereiche aufweist, wobei der Träger in den äußeren Eingriffsbereichen zumindest bereichsweise nach unten abgekantet ist und in dem abgekanteten Eingriffsbereich mit zumindest einem Schneidelement aus einem härteren Material als der Träger bestückt ist.

In der modernen Landwirtschaft spielt eine hohe Produktivität eine große Rolle. Für einen hohen Ertrag ist neben anderen Bedingungen auch eine schnelle und gründliche Bodenaufbereitung ein mitentscheidender Faktor.

Eine hohe Produktivität in der Bodenbearbeitung wird auch durch die Geschwindigkeit bestimmt, mit welcher einzelne Arbeitsschritte bei der Bodenaufbereitung durchgeführt werden können. Je höher allerdings die Geschwindigkeit, umso größer ist auch der Verschleiß eingesetzter Bodenbearbeitungsgeräte wie zum Beispiel Scharen, beispielsweise Gänsefußscharen oder Hackscharen. Um mit dem Verschleiß zurechtzukommen, ist man in jüngeren Entwicklungen dazu übergegangen, entsprechende Bodenbearbeitungsgeräte, die viele Jahrzehnte ausschließlich aus Stahl gefertigt wurden, mit Einsätzen aus Hartmetall zu bestücken. Die Hartmetalleinsätze stellen Schneidelemente dar. Die Schneidelemente werden dabei vorrangig in jenen Bereichen an einem Träger aufgebracht, welche für die Schnittleistung erforderlich sind. Es sind allerdings auch Lösungen bekannt geworden, die in nicht schneidaktiven Bereichen Hartmetalleinsätze aufweisen, um beispielsweise einem Verschleiß durch abgleitendes Erdreich entgegenzuwirken.

Wenngleich mit der Weiterentwicklung zu hartmetallbestückten Bodenbearbeitungsgeräten mit einem Träger aus Stahl erhebliche Fortschritte in der Standzeit erzielt wurden, die so beachtlich sind, dass sich eine Verwendung des an sich deutlich teureren Hartmetalls auch wirtschaftlich rechnet, ist die Standzeit für einzelne Anwendungsfälle nach wie vor zu gering. Auch wenn die Standzeit in vielen Fällen nach oben geht, ist insbesondere bei Hackscharen zu beobachten, dass diese im Bereich einer Spitze des Trägers, aber auch anderen Bereichen des Trägers sehr rasch verschleißen können. Dies hängt mit großen Unterschieden im zu bearbeitenden Boden zusammen: Die Bodenbearbeitung kann sich als leicht bis schwer darstellen, was insbesondere vom Wetter und Saisoneffekten abhängt. Des Weiteren ist auch der Steinbesatz des bearbeiteten Bodens mitentscheidend für den Verschleiß, da der Steinbesatz von sehr wenig bis sehr viel betragen kann. Sind zum Beispiel trockene und harte Bedingungen (Trockenperiode und hoher Steinbesatz) gegeben, verschleißt vor allem eine Spitze des Trägers sehr rasch. Sind hingegen feuchte und weiche Bedingungen gegeben (Regenperioden und wenig Steinbesatz), verschleißt vorrangig der Träger in einem hinteren Bereich, da der Boden wie Schmirgelpapier wirkt. Insgesamt sind somit sehr unterschiedliche Verschleißprofile gegeben, die trotz Bestückung mit Schneidelementen aus einem Hartmetall zu einem unerwartet raschen Versagen des Bodenbearbeitungsgerätes führen können.

Im Rahmen der Erfindung wurden verschiedene Überlegungen angestellt, wie zumindest einzelne dieser Probleme bei Hackscharen adressiert werden können. Eine erste Idee wäre, den Träger stärker auszubilden, was allerdings bei Hackscharen nicht möglich ist. Der Träger einer Hackschare kann in der Praxis maximal eine Dicke von etwa 4 mm bis 5 mm aufweisen. Dies ist dadurch bedingt, dass die Hackscharen für die schneidende Bearbeitung von Unkraut, auch im Bereich von wachsenden Kulturen, verwendet werden und in etwa 2 cm Tiefe Wurzelköpfe von Unkraut abschneiden sollen. Es handelt sich somit um relativ feine, an größeren Bodenbearbeitungsgeräten anbringbare Bodenbearbeitungswerkzeuge, die zudem meist durch Kaltverformung erstellt werden, was eine Trägerdicke aus praktischen Aspekten bei der Herstellung ebenfalls limitiert.

Die Erfinder haben im Rahmen weiterer Überlegungen erkannt, dass die Standzeit von einer Hackschar im Bereich der Trägerspitze, welche in der Regel gegenüber der verbleibenden Trägerunterseite nach unten vorragend bzw. abgekantet ausgebildet ist, erheblich verlängert werden kann, wenn der Träger im abgekanteten Eingriffsbereich an einer Unterseite mit einer Verstärkung ausgebildet ist.

Auf Basis dieser Erkenntnis ist es Aufgabe der Erfindung, eine Schar der eingangs genannten Art, insbesondere Hackschar, derart weiterzubilden, dass eine erhöhte Standzeit der Schar, insbesondere Hackschar, gegeben ist.

Diese Aufgabe wird gelöst, wenn bei einer Schar der eingangs genannten Art der Träger im abgekanteten Eingriffsbereich an einer Unterseite mit einer Verstärkung ausgebildet ist.

Erfindungsgemäß wird der Vorteil einer höheren Standzeit einer Schar erzielt, insbesondere einer Hackschar, deren Träger eine maximale Dicke von 5 mm aufweist. Bislang hatte sich das Problem ergeben, dass der Träger im abgekanteten Eingriffsbereich zwar mit einem Schneidelement aus einem härteren Material als der Träger bestückt war, allerdings unmittelbar nach dieser bestückten Zone ein Verschleiß zu beobachten war. Da für die Bestückung mit einem Hartmetalleinsatz bzw. Schneidelement ein entsprechender Sitz am Träger geschaffen werden muss, üblicherweise durch Fräsen, erfolgt im abgekanteten Bereich unmittelbar im Anschluss an die bestückte Zone ein relativ rascher Verschleiß. Dies ist dadurch verstärkt, dass der abgekantete Eingriffsbereich für den Einzug in das Erdreich sorgen soll und daher einer besonders großen Beanspruchung unterliegt. Ist nun an der Unterseite des Trägers eine Verstärkung vorgesehen, kann dieser Verschleißerscheinung nachhaltig Einhalt geboten werden.

Die Verstärkung kann grundsätzlich auf beliebige Weise erfolgen. Beispielsweise kann die Verstärkung aus einem oder mehreren Stäben bestehen, welche mit der Unterseite des Trägers verbunden sind. Besonders bevorzugt ist es jedoch, auch einer einfachen Ausbildung wegen, wenn die Verstärkung durch eine oder mehrere Aufschweißungen gebildet ist. Aufschweißungen lassen sich relativ einfach und schnell herstellen. Aufschweißungen sind auch ausreichend, beispielsweise durch eine wulstartige Verstärkung der Unterseite, um mit einfachen Mitteln die gewünschte längere Standzeit zu erreichen.

Der Träger kann in der üblichen Weise aus einem Stahl gebildet sein. Insbesondere im Zusammenhang mit Aufschweißungen, die dann ebenfalls aus einem Stahl, bevorzugt einem gut schweißbaren Stahl gebildet sind, ergibt sich eine einfache Möglichkeit der Verstärkung. Der Träger ist in der Regel durch eine Wärmebehandlung vergütet, insbesondere gehärtet.

Die Verstärkung an der Unterseite sollte insbesondere auch den Bereich der Abkantung an sich zumindest teilweise abdecken. Bevorzugt erstreckt sich die Verstärkung vom abgekanteten Bereich über eine Abkantungslinie hinweg zu einem gegenüberliegenden Bereich des Trägers, sodass sich eine effiziente Kraftableitung ergibt.

Das zumindest eine Schneidelement ist mit Vorteil aus einem Hartmetall gebildet. Das Schneidelement ist eine Schneidplatte, welche am Träger befestigt wird. Hierfür ist der Träger für die Schneidplatte mit einem geeigneten Plattensitz für dieselbe ausgestattet. Sind mehrere Schneidplatten vorgesehen, kann für jede einzelne Schneidplatte jeweils ein Plattensitz vorgesehen sein. Die Plattensitze sind bevorzugt so ausgelegt, dass die einzelnen Schneidplatten sich nicht unmittelbar berühren, aber so angeordnet sind, dass sich in stirnseitiger Ansicht eine durchgehende Schnittlinie ergibt. Die Schneidelemente bzw. Schneidplatten aus einem Hartmetall können dann in den Plattensitzen durch Löten befestigt werden.

Hartmetall für die Schneidelemente bzw. Schneidplatten kann aus einem Hartstoff wie Wolframcarbid und einem Bindemetall bestehen, wobei das Bindemetall ein oder mehrere Metalle ausgewählt aus der Gruppe bestehend aus Cobalt, Nickel und/oder Eisen umfasst. Besonders bevorzugt kommen solche Hartmetalle zum Einsatz, bei denen der Anteil an Cobalt möglichst minimiert ist. Ein Anteil des Bindemetalls liegt in der Regel zwischen 5 Gewichtsprozent (im Folgenden kurz: Gew.-%) und 15 Gew.-%. Der Rest ist aus dem Hartstoff gebildet. Der Hartstoff besteht bevorzugt aus Wolframcarbid, kann aber auch zusätzlich oder alternativ Titancarbid oder andere Carbide wie Niobcarbid und/oder Tantalcarbid umfassen.

Der Träger ist in Draufsicht bevorzugt v-förmig ausgebildet, wobei eine Trägerspitze in Arbeitsrichtung einen vordersten Eingriffsbereich darstellt. Die Trägerspitze definiert somit den vordersten Punkt in Arbeitsrichtung, an welchen Erdreich mit dem Träger bzw. der Schar in Kontakt tritt. In diesem vordersten Eingriffsbereich ist ein Schneidelement am Träger befestigt. Entlang der sich zu beiden Seiten der Trägerspitze erstreckenden Flügel der v-förmigen Ausbildung sind mit Vorteil weitere Schneidelemente vorgesehen. Diese Schneidelemente können in Arbeitsrichtung betrachtet so nebeneinander angeordnet sein, dass sich bei stirnseitiger Ansicht eine durchgehende Schnittlinie ergibt.

Die v-förmige Ausbildung des Trägers kann so gestaltet sein, dass zwei Flügel der v-förmigen Ausbildung spiegelsymmetrisch zueinander vorliegen. Es ergibt sich dann in Draufsicht ein V, dessen äußere Eingriffsbereiche von Schneidelementen besetzt sind. Die Schneidelemente sind so angeordnet, dass mehr als 70 %, bevorzugt mehr als 80 %, insbesondere mehr als 85 %, beispielsweise 90 % oder mehr des äußeren Eingriffsbereiches oder schneidaktiven Trägerrandes von Schneidplatten besetzt sind. An der gegenüberliegenden, nicht eingriffsaktiven Rückseite sind die zwei Flügel durch einen Befestigungsbereich verbunden. Der Befestigungsbereich ragt von einer übrigen Oberseite des Trägers auf. Da die Trägerspitze den vordersten Eingriffsbereich darstellt und daher einer besonders hohen Belastung unterliegt, ist es besonders bevorzugt, dass die Trägerspitze an der Unterseite mit der Verstärkung verstärkt ist.

Um ein gutes Einziehen der Schar, insbesondere einer Hackschar, in Erdreich zu ermöglichen, ist die Trägerspitze bevorzugt abgekantet. Dies bedeutet, dass der Eingriffsbereich zumindest im Bereich der Trägerspitze relativ zu dem dahinter anschließenden Bereich des Trägers nach unten hin mit einem Winkel abfällt. Dieser Winkel ist in der Regel relativ klein bemessen und beträgt maximal 5°, beispielsweise 1° bis 2,5°. Dies ermöglicht ein besonders gutes Einziehen, bringt allerdings auch eine erhöhte Beanspruchung im Bereich der Abkantung mit sich. Diese erhöhte Beanspruchung kann aber durch die vorgesehene Verstärkung völlig kompensiert werden. Der an sich sensible Bereich hinter dem Schneidelement hält dann erhöhten Belastungen Stand.

Üblicherweise definiert die Trägerspitze einen tiefsten Punkt der Schar, da die Trägerspitze in Arbeitsrichtung den übrigen Schneidbereichen in den äußeren Eingriffsbereichen vorgelagert ist.

Der Träger kann an einer Oberseite mit einem Steg ausgebildet sein, wobei der Steg einen stirnseitigen Bereich des Trägers mit einem Befestigungsbereich verbindet. Mit einer derartigen Ausbildung kann neben der Verstärkung an der Unterseite zusätzlich auch im Bereich der Oberseite des Trägers ein Verschleiß hintangehalten werden. Variieren nämlich Bodenbedingungen, kann ein merklicher Verschleiß auch an der Oberseite des Trägers auftreten, sodass dieser derart verschlissen wird, dass ein Loch entsteht und die Schar nicht mehr nutzbar ist, obwohl die Schneidelemente als solche noch funktionstüchtig wären.

Der Steg kann als auf dem Träger angeordnete zusätzliche Verstärkung ausgebildet sein. Bevorzugt ist der Steg jedoch ebenso wie die unterseitige Verstärkung aufgeschweißt, weil dies eine rasche Fertigung erlaubt.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 eine Hackschar nach dem Stand der Technik mit verschlissener Trägerspitze;
Fig. 2 eine Hackschar gemäß dem Stand der Technik mit verschlissener Oberseite;
Fig. 3 eine Hackschar in Draufsicht;
Fig. 4 die Hackschar aus Fig. 3 in einer Seitenansicht;
Fig. 5 die Hackschar aus Fig. 3 in einer Ansicht von unten.

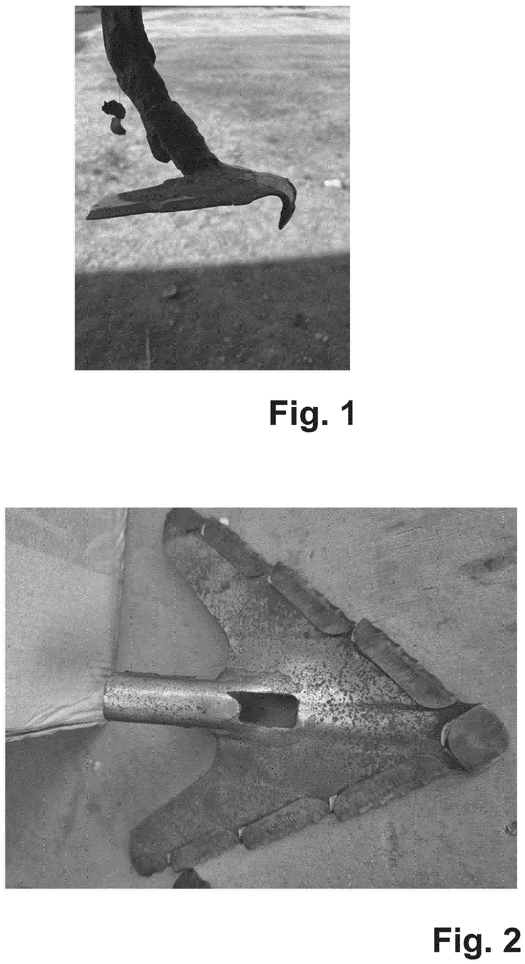

In Fig. 1 und Fig. 2 sind zwei Hackscharen gezeigt, welche jeweils aufgrund von Materialverschleiß unbrauchbar geworden sind, obwohl beide Hackscharen mit Schneidplatten besetzt sind, welche für einen weiteren Einsatz der Hackscharen noch ausreichend gut ausgebildet wären. Bei der Verschleißerscheinung in Fig. 1 besteht die Verschleißerscheinung in einer umgebogenen Spitze der Hackschar. Im Bereich der Spitze ist die Hackschar durch den Eingriff in das Erdreich sehr stark belastet. Da für eine Schneidplatte im Bereich der Spitze ebenso wie für die anderen Schneidplatten ein Plattensitz mittels einer Einfräsung zu schaffen ist, ist der Träger in diesem Bereich relativ schwach ausgebildet. Dies führt dazu, dass nach der Spitze des Trägers eine Schwachstelle gegeben ist, welche zu dem gezeigten Schadensbild führt.

Während Versagen gemäß Fig. 1 insbesondere bei hartem Boden auftreten kann, können auch weiche Bodenverhältnisse zu einem Materialversagen führen, in diesem Fall aber, wie in Fig. 2 ersichtlich, in einem Ansatzbereich zur Befestigung an einem Stiel. Weiche Beschaffenheit des zu bearbeitenden Erdreichs kann dazu führen, dass das über die Hackschar abgeführte Erdreich mit derart hoher Wirkung an der Hackschar reibt, der Abrieb zur Ausbildung von Löchern führt. Die Löcher befinden sich im Bereich der stärksten Beanspruchung.

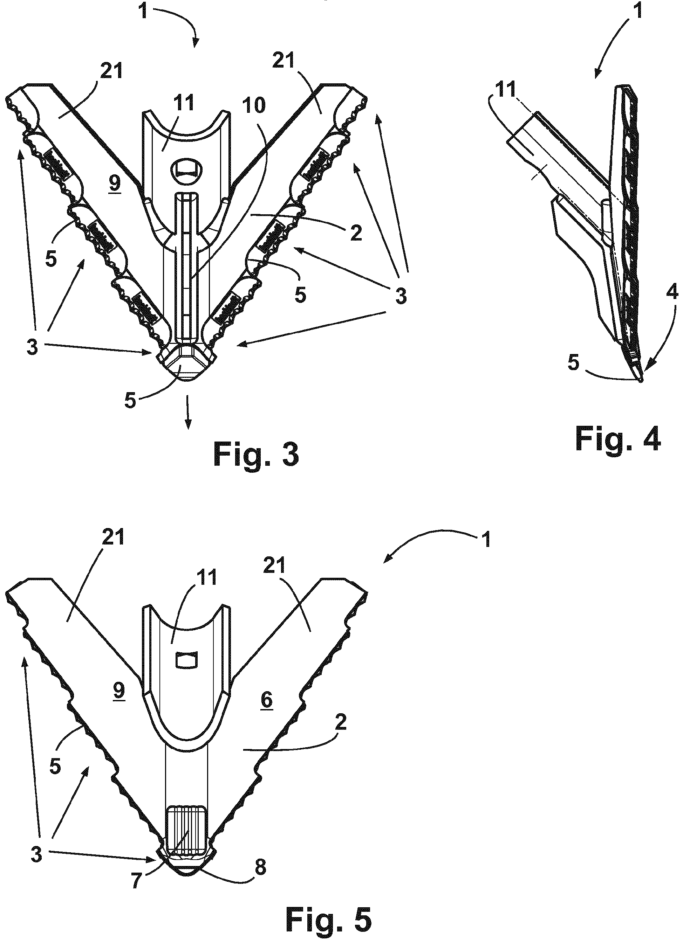

In Fig. 3 bis Fig. 5 ist eine erfindungsgemäße Hackschar 1 dargestellt. Wie in Fig. 3 ersichtlich ist, ist die Hackschar mit einem Träger 2 ausgebildet. Der Träger 2 ist in Draufsicht im Wesentlichen v-förmig ausgebildet. Der Träger 2 umfasst zwei spiegelsymmetrisch angeordnete Flügel 21. Die Flügel 21 definieren in Arbeitsrichtung (angedeutet durch den Pfeil in Fig. 3) äußere Eingriffsbereiche 3. Diese äußeren Eingriffsbereiche 3 sind mit Schneidelementen 5 bzw. Schneidplatten besetzt. Im gegenständlichen Ausführungsbeispiel sind zwei Arten von Schneidplatten vorgesehen, nämlich etwa längliche Schneidplatten mit einzelnen in Arbeitsrichtung positionierten Schneidzähnen, sowie eine davon verschiedene Schneidplatte, die im Bereich einer Trägerspitze 8, einem vordersten Eingriffsbereich der Hackschar 1, angeordnet ist. In dem der Trägerspitze 8 gegenüberliegenden rückseitigen Bereich liegt ein Befestigungsbereich 11 vor, welcher die beiden Flügel 21 miteinander verbindet. Der Befestigungsbereich 11 ist mit den Flügeln 21 integral ausgebildet. Insbesondere kann der Träger 2 aus einem einzigen Stück aus einem Stahl gefertigt sein, insbesondere durch Kaltverformung.

Wie in Fig. 4 ersichtlich ist, ist die Trägerspitze 8 derart abgekantet, dass die Trägerspitze 8 einen tiefsten Punkt der Hackschar 1 definiert. In diesem vordersten, abgekanteten Eingriffsbereich 4 greift die Trägerspitze 8 in Arbeitsrichtung zunächst in das Erdreich ein, ehe die übrigen Schneidelemente 5, die in den äußeren Eingriffsbereichen 3 vorliegen, ebenso mit dem Erdreich in Eingriff kommen und auch abgekantet sein können. Die Hackschar 1 ist dabei insbesondere dafür ausgelegt, Unkraut durch einen geeigneten Schnitt etwa 2 cm unterhalb der Erdoberfläche unschädlich zu machen. Dabei kann die Hackschar 1 auch dann eingesetzt werden, wenn ein Kulturbestand schon sichtbar ist und zwischen einzelnen Pflanzenreihen Unkraut unschädlich gemacht werden soll, um für die eigentlichen Kulturpflanzen mehr Nährstoffe zur Verfügung zu haben und damit einen besseren Ertrag zu erzielen.

Gemäß der Erfindung ist an einer Unterseite 6 der Träger mit einer Verstärkung 7 ausgebildet, wie dies in Fig. 5 ersichtlich ist. Die Verstärkung 7 kann insbesondere durch eine Aufschweißung gebildet sein. Die Verstärkung 7 ist so dimensioniert, dass das in Fig. 1 ersichtliche Schadensbild vermieden wird. Dabei ist es ausreichend, dass die Verstärkung 7 so ausgelegt ist, dass die einzelnen Schneidelemente 5 bis zur Funktionsuntüchtigkeit verwendet werden können. Anschließend spielt es auch keine Rolle mehr, wenn die Trägerspitze 8 eine Verbiegung erfährt.

Wie in Fig. 3 ersichtlich ist, ist an einer Oberseite 9 des Trägers 2 ein Steg 10 vorgesehen. Mit dem Steg 10 wird das in Fig. 2 ersichtliche Schadensbild adressiert: Durch den Steg 10 ist im Bereich der Oberseite 9 des Trägers 2 eine zusätzliche Verstärkung gegeben. Diese zusätzliche Verstärkung sorgt dafür, dass das Erdreich über die Hackschar 1 abgleiten kann, ohne dabei bei ungünstigen Bodenbedingungen für die Ausbildung eines Loches zu sorgen. Der Steg 10 kann ebenso wie die an der Unterseite des Trägers vorgesehene Verstärkung 7 aufgeschweißt sein. Dabei ist der Steg 10 wiederum so optimiert, dass ein Materialeinsatz minimiert ist, aber der Träger 2 solange intakt bleibt, als die Schneidelemente 5 noch brauchbar sind.

## Patentansprüche

1. Schar, insbesondere Hackschar (1), zum Eingriff in Erdreich, aufweisend einen Träger (2), welcher in Arbeitsrichtung schneidaktive äußere Eingriffsbereiche (3) aufweist, wobei der Träger (2) in den äußeren Eingriffsbereichen (3) zumindest bereichsweise nach unten abgekantet ist und in dem abgekanteten Eingriffsbereich (4) mit zumindest einem Schneidelement (5) aus einem härteren Material als der Träger (2) bestückt ist, **dadurch gekennzeichnet, dass** der Träger (2) im abgekanteten Eingriffsbereich (4) an einer Unterseite (6) mit einer Verstärkung (7) ausgebildet ist.

2. Schar nach Anspruch 1, **dadurch gekennzeichnet, dass** die Verstärkung (7) durch eine oder mehrere Aufschweißungen gebildet ist.

3. Schar nach Anspruch 1 oder 2, **dadurch gekennzeichnet, dass** der Träger (2) aus einem Stahl gebildet ist.

4. Schar nach einem der Ansprüche 1 bis 3, **dadurch gekennzeichnet, dass** das zumindest eine Schneidelement (5) aus einem Hartmetall gebildet ist.

5. Schar nach einem der Ansprüche 1 bis 4, **dadurch gekennzeichnet, dass** der Träger (2) in Draufsicht v-förmig ausgebildet ist, wobei eine Trägerspitze (8) in Arbeitsrichtung einen vordersten Eingriffsbereich (4) darstellt.

6. Schar nach Anspruch 5, **dadurch gekennzeichnet, dass** die Trägerspitze (8) an der Unterseite (6) mit der Verstärkung (7) verstärkt ist.

7. Schar nach Anspruch 5 oder 6, **dadurch gekennzeichnet, dass** die Trägerspitze (8) abgekantet ist.

8. Schar nach einem der Ansprüche 5 bis 7, **dadurch gekennzeichnet, dass** die Trägerspitze (8) einen tiefsten Punkt der Schar definiert.

9. Schar nach einem der Ansprüche 1 bis 8, **dadurch gekennzeichnet, dass** der Träger (2) an einer Oberseite (9) mit einem Steg (10) ausgebildet ist, wobei der Steg (10) einen stirnseitigen Bereich des Trägers (2) mit einem Befestigungsbereich (11) verbindet.

10. Schar nach Anspruch 9, **dadurch gekennzeichnet, dass** der Steg (10) aufgeschweißt ist.
